(19) Europäisches Patentamt
European Patent Office
Office européen des brevets

(11) Publication number: 0 083 168
B1

(12) EUROPEAN PATENT SPECIFICATION

(45) Date of publication of patent specification: 03.09.86

(51) Int. Cl.$^4$: C 08 L 25/06, C 08 L 25/16, C 08 L 53/02, C 08 F 297/04

(21) Application number: 82306562.8

(22) Date of filing: 09.12.82

# (54) P-methylstyrene-conjugated diene-styrene block copolymers and blends thereof with polystyrene, poly(p-methylstyrene) and copolymers thereof.

(30) Priority: 28.12.81 US 335294
30.12.81 US 335779

(43) Date of publication of application:
06.07.83 Bulletin 83/27

(45) Publication of the grant of the patent:
03.09.86 Bulletin 86/36

(84) Designated Contracting States:
BE DE FR GB IT NL

(56) References cited:
EP-A-0 027 312
EP-A-0 030 075
GB-A-1 414 924

(73) Proprietor: MOBIL OIL CORPORATION
150 East 42nd Street
New York New York 10017 (US)

(72) Inventor: Murray, James Gordon
9 Lycoming Lane
East Brunswick New Jersey 08816 (US)

(74) Representative: West, Alan Harry et al
Mobil Court 3 Clements Inn
London WC2A 2EB (GB)

EP 0 083 168 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to p-methylstyrene-conjugated diene-styrene A—B—A' block copolymers and blends thereof with polystyrene, poly(p-methylstyrene) and copolymers of styrene and p-methylstyrene.

Elastomeric A—B—A styrene-diene block copolymers are known and blends thereof with poly-(p-methylstyrene) are described in U.S. Patent 4,275,179.

GB—A—1,414,924 describes a method of preparing a thermostable block copolymer A—B—C where A is a poly-alpha-methylstyrene block, B is a poly-conjugated diene block and C is a polystyrene block. The alpha-methylstyrene polymerization is conducted in a non-polar medium. The block-copolymerization of the conjugated diene and the styrene is performed in a hydrocarbon solvent.

EP—A—0,030,075 describes an A—B—A p-methylstyrene-conjugated diene-p-methylstyrene block copolymer containing, by weight of the block copolymer, 10—40% p-methylstyrene and 90—60% conjugated diene.

In one aspect, the present invention provides an A—B—A' p-methylstyrene-conjugated diene-styrene block copolymer containing, by weight of the block copolymer, 5—40% p-methylstyrene, 5—40% styrene, and 20—80% conjugated diene.

The present invention also provides a blend of polystyrene, poly(p-methylstyrene) or a copolymer of styrene and p-methylstyrene and an A—B—A' p-methylstyrene-conjugated diene-styrene block copolymer containing, by weight of the block copolymer, 5—40% p-methylstyrene, 5—40% styrene, and 20—80% conjugated diene.

The monomer used in preparing the A block of the A—B—A' block copolymers of this invention is p-methylstyrene, although it is also possible to use mixtures of methylstyrene isomers rich in p-methylstyrene. Such mixtures contain at least 95 weight percent, preferably 97—99 weight percent p-methylstyrene and less than 0.1 weight percent o-methylstyrene with the balance being m-methylstyrene. A typical mixture contains, by weight, about 97 percent p-methylstyrene, about 3 percent m-methylstyrene, and about 0.05 percent O-methylstyrene. Such mixtures may be obtained by catalytic dehydrogenation of the mixtures of ethylmethyl benzene isomers described in U.S. Patent No. 4,086,287.

The conjugated diene to be employed in the formation of the polymer block B preferably has from 4—8 carbon atoms per molecule and still more preferably from 4—5. Thus, the preferred species are 1,3-butadiene and isoprene, although methylisoprene and other conjugated dienes may be utilized, as well as mixtures thereof. Hence, the preferred block copolymers are poly(p - methylstyrene) - poly - 1,3 - butadiene - polystyrene and poly(p - methylstyrene) - polyisoprene - polystyrene, as well as hydrogenated derivatives of these polymers.

The hydrogenated materials may be hydrogenated to any desired extent, although the substantially complete hydrogenation of at least the conjugated diene polymer block is desirable. In any event, if hydrogenation is effected, it is desirable to reduce the original unsaturation of the block copolymer by at least 50% and preferably by at least 90%. The reasons for hydrogenation are that it increases the stability of the product as well as raises the softening point thereof.

The ABA' block copolymer contains from 5 weight percent to 40 weight percent poly(p-methylstyrene) from 5 weight percent to 40 weight percent styrene, and from 20 weight percent to 80 weight percent conjugated diene. The preparation of a typical ABA' block copolymer is illustrated by reference to a p - methylstyrene - isoprene - styrene block copolymer. The first polymer block comprising poly(p-methylstyrene) terminated with lithium is formed in a zone by introduction of p-methylstyrene, cyclohexane (as a suitable solvent), and secondary butyl lithium into the polymerization zone. After formation of the first polymer block, the elastomeric polymer block is formed by introduction of isoprene into the reaction mixture, preferably together with further solvent, including a refluxing phase for temperature control. This results in the formation of an intermediate block copolymer comprising a first block of poly(p-methylstyrene) and a second block of polyisoprene terminated with lithium. In the third stage of the process, styrene is added to the reaction mixture and polymerization continued to form the three polymer block A—B—A', still terminated with lithium which is removed in the final stage of the process by the addition of a chain terminator, such as an alcohol.

The initiators to be used in the process of preparing the block copolymers comprise alkyl lithium compounds which may be either primary, secondary or tertiary alkyls. These will have the general configuration

$$\begin{array}{c} R' \\ | \\ R-C-Li \\ | \\ R' \end{array}$$

wherein R is an alkyl radical and R' is hydrogen or alkyl. They include particularly normal butyl lithium, secondary butyl lithium, tertiary butyl lithium, secondary amyl lithium, tertiary amyl lithium, secondary hexyl lithium, tertiary hexyl lithium and other alkyl lithium compounds preferably having from 4 to 8 carbon atoms per molecule.

The proportion of initiator taking an active part in the block copolymerization may be varied between 100 and 2000 parts per million, based on the weight of the total monomers used.

Polymerization is conducted at temperatures in the order of −20°C. to 100°C., preferably at temperatures between 20°C. and 65°C., the temperature being controlled to yield the polymer product within a reasonable length of time at the initiator level being utilized.

The conditions of polymerization are adjusted so as to produce a first polymeric block having an average molecular weight between 2,000 and 100,000. Having formed this first polymer block, the next stage in the process comprises addition of the second type of monomer, in this illustrative instance being a conjugated diene, such as one of those enumerated above. The proportion of monomer, assuming substantially complete polymerization thereof, is sufficient to form a polymer block having an average molecular weight between 25,000 and 1 million. Since, under the conditions of the process, the first polymer block is a "living polymer chain" terminated with a lithium radical, the block polymerization proceeds at the end of each of these living chains to form an intermediate two-block polymer having the structure A—B—Li. After completion of the second polymer block, the terminal polymer block is formed by introduction of the styrene. Again, this block copolymerizes with the living polymer chains and results under the conditions employed in the formation of a living three-block polymer having the general configuration A—B—A'—Li. The lithium is deactivated and the polymerization terminated by the injection at this point of a suitable chain terminator such as an alcohol or $H_2O$.

Block copolymerization is preferably conducted in the presence of a solvent chosen with particular reference to two criteria. Firstly, if a borderline solvent system is utilized, in which the block copolymer at any stage in its preparation becomes somewhat insoluble, the danger exists that chain growth will be slow and non-uniform as a result of the monomer being rendered inaccessible to the growing chains at that point, resulting in broad molecular weight distributions both for the block in question and for the next block to form thereon. Precipitation of a polymer at any stage may be due either to insolubility of the particular species at that time in the solvent present but may be strongly affected by the temperature utilized for the polymerization procedure. Solvents may be selected for a secondary purpose, namely, the control of temperature during polymerization by reflux. Consequently, the temperature and solvent chosen for the process both have powerful effects on the ultimate properties of the polymerization product.

It is preferable to employ as the solvent a cyclic hydrocarbon, which may be either a cycloaliphatic, such as cyclohexane, or a member of the benzene series, such as benzene or toluene. The former type namely, a cycloaliphatic hydrocarbon, is preferred since such materials are more easily purified. It is to be appreciated that mere traces of certain impurities, such as acetylenic impurities may have powerful deleterious effects upon the continuance of polymerization in the presence of the extremely small proportions of catalyst required.

Anionic polymerization is hindered by the presence of impurities that will react with the alkyl lithium initiators, such as acetylenic compounds, water and alcohols. In commercial scale operation, the reactants are purified by passing them through suitable absorption columns. In laboratory runs, however, purification is accomplished by titrating with butyllithium (BuLi) solution to a red end point, using phenanthroline indicator. As will be apparent, the strength of the BuLi solution is not a critical factor.

The A—B—A' block copolymer of the invention may be blended with polystyrene, poly(p-methylstyrene), a copolymer of styrene and p-methylstyrene or mixtures thereof. The polystyrene used in such blends may be produced by any of the methods well known in the art. The preparation of suitable poly(p-methylstyrene) polymers and random copolymers of styrene and p-methylstyrene is described in, for example, U.S. Patent 4,306,049.

The weight ratio of the A—B—A' block copolymer and the other polymer, copolymer or mixtures thereof can be varied widely, generally within the ratio of 1:99 to 99:1 and more specifically in the range of 25:75 to 75:25.

Blending of the polymers is accomplished by procedures well known in the art including mixing solutions of the polymers in a suitable solvent, toluene for instance, and precipitating the blend; and mixing in a Brabender mixer ('Brabender" is a trade mark), extruder or in a 2-roll differential speed mixer.

The blends of this invention exhibit, in general, high impact and stress crack resistance at minimum rubber levels and can be used to balance properties by blending with other compatible resins such as high impact polystyrene and high impact para-methyl styrene.

One particularly interesting potential use is in the preparation of blends of polystyrene and poly(p-methylstyrene). Poly(p-methylstyrene) and polystyrene are incompatible. Using the triblock polymers as a "bridge" or "linking agent", uniform mixtures or blends of poly(p-methylstyrene) and polystyrene can be formed. The poly(p-methylstyrene) block of the triblock polymer will be compatible with the poly(p-methylstyrene) and the polystyrene block will be compatible with the polystyrene, with the two portions of the admixture being linked by the elastomeric polybutadiene block.

The following examples demonstrate the preparation of the A—B—A' block copolymers and blends thereof in accordance with this invention.

Example 1

Preparation of p-methylstyrene-diene-styrene block copolymers

p-Methylstyrene (50 g., 97% para) was dissolved in 500 ml. of dry, air-free hexane and polymerized at 60°C., using 0.38 ml. of 2.6 M butyl

lithium solution, until the reaction mixture no longer had any odor characteristic of p-methylstyrene. 1,3-Butadiene (50g.), which had been purified by treatment at −80°C. with butyl lithium, was distilled into the solution containing the living poly(p-methylstyrene) anion. After stirring overnight at room temperature, the reaction mixture was warmed to 60°C. for two hours to complete the polymerization of the butadiene. Styrene (50 g.), which had been titrated with butyl lithium to a faint orange color, was then added and polymerized at 60°C. to complete the formation of the triblock polymer. The resulting polymer could be precipitated in methanol and, after drying, compression moulding of the polymer could be effected to yield an optically, clear, tough film.

Example 2
Preparation of a blend of A—B—A' block copolymers and poly(p-methylstyrene)

Toluene solutions of the A—B—A' block copolymer of Example 1 and of poly(p-methylstyrene) (1:1 weight ratio) were precipitated into methanol and dried. Transmission electron microscopy (40,000×) of a molded sample of the product (which was clear) in which the unsaturated diene portion of the block copolymer phase had been stained with osmium tetroxide showed a structure containing small domains of about 100 Anstroms (10 nm) in size which had agglomerated into larger "grape cluster" structures contained in a continuous matrix of poly(p-methylstyrene).

Example 3
Preparation of a blend of A—B—A' block copolymer and polystyrene

In a manner similar to Example 2 a blend of the block copolymer of Example 1 with polystyrene was prepared. Again the sample was clear. The photograph by transmission electron microscopy (40,000×) showed a continuous network of the block copolymer in a polystyrene matrix.

Example 4
Preparation of blends of A—B—A' block copolymer, polystyrene and poly(p-methylstyrene)

Blends of the block copolymer of Example 1 (A—B—A') with both polystyrene (PS) and poly(p-methylstyrene) (PPMS) were prepared in ratios A—B—A':PS:PPMS of 10:2:10 and 10:10:2. Molded samples of both were clear. The transmission electron photograph of the first sample (10:2:10) showed a block phase which appeared to surround a large number of occlusions. In the second sample (10:10:2) there were a large number of agglomerated small domains with some area of continuous polystyrene phase present.

**Claims**

1. An A—B—A' p-methylstyrene-conjugated diene-styrene block copolymer containing, by weight of the block copolymer, 5—40% p-methylstyrene, 5—40% styrene, and 20—80% conjugated diene.

2. The block copolymer of claim 1, wherein said conjugated diene is 1,3-butadiene.

3. The block copolymer of claim 1, wherein said conjugated diene is isoprene.

4. The block copolymer of any preceding claim wherein at least the conjugated diene component is at least partially hydrogenated.

5. A blend comprising an A—B—A' block copolymer as claimed in any preceding claim and at least one polymer selected from polystyrene, poly(p-methylstyrene) and a copolymer of styrene and p-methylstyrene.

6. The blend of claim 5 in which said polymer blended with the A—B—A' block copolymer is polystyrene.

7. The blend of claim 5 in which said polymer blended with the A—B—A' block copolymer is poly(p-methylstyrene).

8. The blend of claim 5 in which said polymer blended with the A—B—A' block copolymer is a mixture of polystyrene and poly(p-methylstyrene).

9. The blend of any one of claims 5 to 8 in which said A—B—A' block copolymer comprises 1 to 99 weight percent of the composition.

10. The blend of any one of claims 5 to 9 in which said A—B—A' block copolymer comprises 25 to 75 weight percent of the composition.

**Patentansprüche**

1. Aus A—B—A'-Paramethylstyrol, konjugiertem Dien und Styrol hergestelltes Blockcopolymerisat, das bezogen auf das Gewicht des Blockcopolymerisats 5 bis 40% Paramethylstyrol, 5 bis 40% Styrol und 20 bis 80% konjugiertes Dien enthält.

2. Blockcopolymerisat nach Anspruch 1, worin das konjugierte Dien 1,3-Butadien ist.

3. Blockcopolymerisat nach Anspruch 1, worin das konjugierte Dien Isopren ist.

4. Blockcopolymerisat nach einem der vorstehenden Ansprüche, worin zumindest die konjugierte Dienkomponente zumindest teilweise hydriert ist.

5. Mischung, die ein A—B—A'-Blockcopolymerisat nach einem der vorstehenden Ansprüche und zumindest ein Polymer, ausgewählt aus Polystyrol, Polyparamethylstyrol und einem Copolymer von Styrol und Paramethylstyrol umfaßt.

6. Mischung nach Anspruch 5, worin das Polymer, das mit dem A—B—A'-Blockcopolymerisat vermischt ist, Polystyrol ist.

7. Mischung nach Anspruch 5, worin das Polymer, das mit dem A—B—A'-Blockcopolymerisat vermischt ist, Polyparamethylstyrol ist.

8. Mischung nach Anspruch 5, worin das Polymer, das mit dem A—B—A'-Blockcopolymerisat vermischt ist eine Mischung von Polystyrol und Polyparamethylstyrol ist.

9. Mischung nach einem der Ansprüche von 5 bis 8, worin das A—B—A'-Blockcopolymerisat 1 bis 99 Gew.-% der Zusammensetzung umfaßt.

10. Mischung nach einem der Ansprüche 5 bis 9, worin das A—B—A'-Blockcopolymerisat 25 bis 75 Gew.-% der Zusammensetzung umfaßt.

**Revendications**

1. Copolymère séquencé p-méthylstyrène-diène conjugué-styrène A—B—A' contenant 5—40% de p-méthylstyrène, 5—40% de styrène et 20—80% de diène conjugué, en poids du copolymère séquencé.

2. Copolymère séquencé selon la revendication 1, dans lequel ledit diène est le 1,3-butadiène.

3. Copolymère séquencé selon la revendication 1, dans lequel ledit diène conjugué est l'isoprene.

4. Copolymère séquencé selon l'une quelconque des revendications précédentes, dans lequel au moins le composant diène conjugué est au moins partiellement hydrogène.

5. Mélange comprenant un copolymère séquencé A—B—A' selon l'une quelconque des revendications précédentes et au moins un polymère choisi parmi le polystyrène, le poly-(p-méthylstyrène) et un copolymère de styrène et de p-méthylstyrène.

6. Mélange selon la revendication 5, dans lequel ledit polymère mélangé avec le copolymère séquence A—B—A' est le polystyrène.

7. Mélange selon la revendication 5, dans lequel ledit polymère mélangé avec le copolymère séquencé A—B—A' est le poly-(p-méthystyrène).

8. Mélange selon la revendication 5, dans lequel ledit polymère mélangé avec le copolymère séquencé A—B—A' est un mélange de polystyrène et de poly-(p-méthylstyrène).

9. Mélange selon l'une quelconque des revendications 5, à 8, dans lequel ledit copolymère séquencé A—B—A' constitue de 1 à 99% en poids de la composition.

10. Mélange selon l'une quelconque des revendications 5 à 9, dans lequel ledit copolymère séquencé A—B—A' constitue de 25 à 75% en poids de la composition.